# EUROPÄISCHE PATENTSCHRIFT

(11) **EP 3 892 919 B1**
(45) Veröffentlichungstag und Bekanntmachung des Hinweises auf die Patenterteilung: **19.11.2025**
(21) Anmeldenummer: 21157370.4
(22) Anmeldetag: 16.02.2021
(51) Int. Cl.: F23N 5/24, F23D 14/62, F24H 8/00, F24H 9/17

(54) **HEIZGERÄT FÜR EIN GEBÄUDE, UMFASSEND EIN SYSTEM MIT EINER STRÖMUNGSFÜHRUNGSEINRICHTUNG ZUR FÜHRUNG MINDESTENS EINER FLUID-STRÖMUNG IM BEREICH EINER FÖRDEREINRICHTUNG DES HEIZGERÄTS**
FLOW GUIDANCE DEVICE FOR GUIDING AT LEAST ONE FLUID FLOW IN THE REGION OF A CONVEYING DEVICE OF THE HEATING DEVICE
APPAREIL DE CHAUFFAGE POUR UN BÂTIMENT COMPRENANT UN SYSTÈME AVEC UN DISPOSITIF DE GUIDAGE D'ÉCOULEMENT PERMETTANT DE GUIDER AU MOINS UN ÉCOULEMENT DE FLUIDE DANS LA ZONE D'UN DISPOSITIF DE TRANSPORT DE L'APPAREIL DE CHAUFFAGE

(30) Priorität: 24.02.2020 DE 102020104718
(43) Veröffentlichungstag der Anmeldung: 13.10.2021
(73) Patentinhaber: Vaillant GmbH, 42859 Remscheid (DE)
(72) Erfinder: Gevers, Hendrik, 50859 Köln (DE); Altendorf, Frank, 51467 Bergisch Gladbach (DE)
(74) Vertreter: Popp, Carsten

(56) Entgegenhaltungen:
- EP-A1- 2 863 120
- DE-A1- 102013 220 954
- US-A- 2 983 592

## Beschreibung

Die Erfindung betrifft ein Heizgerät für ein Gebäude, umfassend ein System mit einer Strömungsführungseinrichtung zur Führung mindestens einer Fluid-Strömung im Bereich einer Fördereinrichtung des Heizgeräts. Die Erfindung kann insbesondere bei einem sogenannten Gas-Luft-Verbund eines Gebläses in einem Brennwertgerät zum Einsatz kommen, das an einer mehrfach belegten Abgasanlage angeschlossen ist.

Die Norm EN 15502-2-1 besagt, dass Kessel in einem Mehrfachbelegungssystem (d.h. einem System, bei dem mehrere Kessel bzw. Heizgeräte an einer gemeinsamen Abgasanlage angeschlossen sind) einer Risikoanalyse unterzogen werden müssen. Diese Risikobewertung muss berücksichtigen, dass ein Kessel aufgrund einer defekten Rückschlagklappe von Kondensat-haltigem Abgas durchströmt werden kann und die Risikobewertung muss einen besseren Einblick in die langfristigen Folgen geben.

Technisch heißt das insbesondere, dass bei einer defekten Rückschlagklappe eines Kessels, der sich in einer Mehrfachbelegung befindet, Abgas anderer Kessel in das defekte Gerät gelangen kann. Dort kondensiert dieses Abgas üblicherweise überwiegend im Gebläse. Der Kondensatpegel kann dort gegebenenfalls immer weiter ansteigen und das Kondensat könnte nach Erreichen eines bestimmten Pegels durch die Venturi-Düse bis zu der Gasarmatur fließen. Dieser Zustand wäre als sicherheitskritisch zu bewerten.

Bei bekannten, gasbetriebenen Heizgeräten ist das Gebläse zur Förderung des Gas-Luft-Gemisches in der Regel im Heizgerät integriert. Die Mischung von Brenngas und Luft erfolgt dabei in der Regel in einer bekannten Strömungsführungseinrichtung (vgl. Figu-ren 1 und 2). Die Gasarmatur ist bei dieser Strömungsführungseinrichtung aus Platzgründen üblicherweise im unteren Bereich bzw. an deren Unterseite angeschlossen. Dies kann jedoch dazu führen, dass Kondensat, welches im Gebläse ansteigt und somit bis zur Venturi-Düse gelangen kann, in Richtung der Gasarmatur fließen kann, wenn es schwerkraftbeding innerhalb der Strömungsführungseinrichtung nach unten abfließt. Kondensat in der Gasarmatur kann Dichtungen, Ventile und Kunststoffteile der Gasarmatur angreifen und diese gegebenenfalls sogar zerstören. Dies könnte zu einem sicherheitskritischen Betriebszustand führen.

Gattungsgemäße Heizgeräte sind beispielsweise in der DE 10 2013 220 954 A1 und EP 2 863 120 A1 beschrieben. Aus der US 2 983 592 A ist ein Brenngasmische für Verbrennungsmotoren bekannt.

Es ist daher Aufgabe der Erfindung, eine Strömungsführungseinrichtung, ein System sowie ein Heizgerät bereitzustellen, die jeweils zumindest dazu beitragen, die Betriebssicherheit eines Heizgerätes zu erhöhen, welches insbesondere auch in einer Mehrfachbelegung betreibbar sein soll.

Diese Aufgabe wird mit einem Heizgerät gemäß Anspruch 1 gelöst. Vorteilhafte Ausgestaltungen ergeben sich durch die Merkmale der abhängigen Ansprüche.

Hierzu trägt ein Heizgerät für ein Gebäude, umfassend ein System mit einer Strömungsführungseinrichtung zur Führung mindestens einer Fluid-Strömung im Bereich einer Fördereinrichtung des Heizgeräts und einem mit der Strömungsführungseinrichtung strömungstechnisch verbundenen Ansaugrohr bei, wobei die Strömungsführungseinrichtung einen Hauptkanal zur Führung einer Fluid-Strömung, die mittels der Fördereinrichtung förderbar ist, sowie einen Gaszufuhr-Kanal, der im Bereich der Unterseite der Strömungsführungseinrichtung einen Anschluss für eine Gasarmatur hat, sich zumindest teilweise entlang des Hauptkanals erstreckt und in einem Venturi-Abschnitt des Hauptkanals in diesen mündet, umfasst, wobei der Gaszufuhr-Kanal derart eingerichtet ist, dass ein Fluss von Kondensat von dem Venturi-Abschnitt des Hauptkanals zu dem Anschluss für die Gasarmatur zumindest teilweise verhindert werden kann, wobei der Gaszufuhr-Kanal derart eingerichtet ist, dass die gesamte durch den Gaszufuhr-Kanal strömende Gaszufuhr-Strömung zunächst mit einer Strömungsrichtung von der Unterseite zu der Oberseite der Strömungsführungseinrichtung zumindest einen unteren Bereich einer Kanalwand des Hauptkanals passieren muss, bevor sie zu dem Venturi-Abschnitt strömen kann, und dass in dem Ansaugrohr eine Kondensat-Ablassöffnung gebildet ist. In dem Gaszufuhr-Kanal ist mindestens ein Barriere-Element angeordnet, welches derart eingerichtet und angeordnet ist, dass es einen Rückströmungsweg von dem Venturi-Abschnitt zu dem Anschluss für die Gasarmatur zumindest teilweise blockieren kann. Das Barriere-Element bedeckt einen unteren Teilbereich eines Kanalquerschnitts des Gaszufuhr-Kanals.

Die Strömungsführungseinrichtung erlaubt in vorteilhafter Weise die Betriebssicherheit eines Heizgerätes zu erhöhen, welches insbesondere auch in einer Mehrfachbelegung betreibbar sein soll. Dies insbesondere dadurch, dass durch eine entsprechende Gestaltung des Verlaufs des Gaszufuhr-Kanals ein Fluss von Kondensat in die Gasarmatur vorteilhaft (zumindest für übliche Pegelstände) blockiert bzw. verhindert werden kann. Die Strömungsführungseinrichtung kann (unmittelbar) mit der Fördereinrichtung verbunden sein, einen Bestandteil der Fördereinrichtung bilden oder die Förderleistungen zumindest teilweise begrenzen. Bei der Fördereinrichtung handelt es sich vorzugsweise um ein Gebläse des Heizgeräts.

Bei dem Heizgerät handelt es sich in der Regel um ein Gasheizgerät. Dies betrifft mit anderen Worten insbesondere ein Heizgerät, welches dazu eingerichtet ist, einen oder mehrere fossile Brennstoffe wie etwa Flüssiggas und/oder Erdgas, ggf. unter Zufuhr von Umgebungsluft aus einem Gebäude oder der Umgebung zu verbrennen, um Energie zur Erwärmung von beispielsweise Wasser zum Gebrauch in einer Wohnung des Gebäudes und/oder einen Wasserkreislauf zum Heizen des Gebäudes oder eines Teils davon zu erzeugen. Beispielsweise kann es sich bei dem Heizgerät um ein sogenanntes Gas-Brennwertgerät handeln. Das Heizgerät weist in der Regel zumindest einen Brenner und eine Fördereinrichtung, wie etwa ein Gebläse auf, die ein Gemisch von Brennstoff (Gas) und Verbrennungsluft (durch einen Gemischkanal des Heizgeräts, hier beispielsweise zumindest abschnittsweise gebildet durch den Hauptkanal der Strömungsführungseinrichtung) zum Brenner fördert.

Anschließend kann das durch die Verbrennung entstehende Abgas durch ein (internes) Abgasrohr des Heizgeräts zu eines Abgasanlage (des Gebäudes) geführt werden. An dieser Abgasanlage können mehrere Heizgeräte angeschlossen sein. Dies wird hier insbesondere auch als sogenannte "Mehrfachbelegung" bezeichnet. Bei einer solchen Mehrfachbelegung sind in der Regel zwischen den jeweiligen Heizgeräten und der gemeinsamen Abgasanlage, zum Beispiel in den (internen) Abgasrohren der Heizgeräte Abgas(rückschlag-)klappen angeordnet, die bei ordnungsgemäßem Betrieb ein (Rück-)Strömen von Abgas aus der gemeinsamen Abgasanlage in ein momentan nicht oder mit einem relativ zur Abgasanlage geringeren Druck betriebenes Heizgerät verhindern soll.

Bei dem Gebäude kann es sich grundsätzlich um ein Wohngebäude und/oder ein gewerblich genutztes Gebäude handeln. Das Heizgerät kann dabei insbesondere zur Beheizung nur eines Teils des Gebäudes, wie etwa einer einzelnen Wohnung, eines einzelnen Raumes genutzt werden. Alternativ oder kumulativ kann das Heizgerät auch zur Beheizung eines Wassersystems (Heizungswasserkreislauf) des Gebäudes oder einer Wohnung zum Einsatz kommen.

Die Strömungsführungseinrichtung weist einen (im Wesentlichen geradlinig verlaufenden) Hauptkanal zur Führung einer Fluid-Strömung auf, die mittels der Fördereinrichtung förderbar ist. Bei der Fluid-Strömung handelt es sich (zumindest stromab des Venturi-Abschnitts) in der Regel um ein Gemisch von Gas (Brenngas) und Luft. Die Strömungsführungseinrichtung weist ferner einen Gaszufuhr-Kanal auf, der im Bereich der Unterseite der Strömungsführungseinrichtung (in der Verbaulage bzw. installierten Position) einen Anschluss für eine Gasarmatur hat, sich zumindest teilweise entlang des Hauptkanals erstreckt und in einem Venturi-Abschnitt des Hauptkanals in diesen mündet. Der Gaszufuhr-Kanal ist somit (in dem Venturi-Abschnitt) mit dem Hauptkanal strömungstechnisch verbunden. Beispielsweise kann in dem Venturi-Abschnitt eine Gasansaug-Öffnung gebildet sein, die den Hauptkanal und den Gaszufuhr-Kanal miteinander verbindet. Die Gasansaug-Öffnung kann sich beispielsweise schlitzförmig und/oder zumindest teilweise umlaufend um eine Längsachse des Hauptkanals erstrecken. Weiterhin ist in der Regel vorgesehen, dass der Gaszufuhr-Kanal den Hauptkanal zumindest abschnittsweise umgibt, insbesondere koaxial umgibt. Dies betrifft insbesondere einen Längsabschnitt, der zwischen dem Venturi-Abschnitt und dem Anschluss für die Gasarmatur liegt. Der Gaszufuhr-Kanal kann sich (somit) insbesondere zumindest teilweise orthogonal und/oder parallel zu dem Hauptkanal erstrecken.

Der Gaszufuhr-Kanal ist derart eingerichtet, dass ein Fluss von Kondensat von dem Venturi-Abschnitt des Hauptkanals zu dem Anschluss für die Gasarmatur zumindest teilweise verhindert werden kann (etwa bedarfsweise mittels einer Ventilfunktion) bzw. zumindest teilweise verhindert wird. Ein Fluss von Kondensat von dem Venturi-Abschnitt zu dem Anschluss kann dadurch zumindest teilweise verhindert werden, dass ein Fluss von Kondensat von dem Venturi-Abschnitt zu dem Anschluss erst dann möglich ist, wenn das Kondensat innerhalb der Strömungsführungseinrichtung einen (vor-)bestimmten bzw. (vor-)bestimmbaren Pegel überschreitet. Der Gaszufuhr-Kanal (insbesondere dessen Verlauf), der Hauptkanal und der Venturi-Abschnitt (insbesondere die Gasansaug-Öffnung) sind derart geformt oder eingerichtet, dass ein Fluss von

Kondensat von dem Venturi-Abschnitt zu dem Anschluss erst und/oder nur dann möglich ist, wenn das Kondensat innerhalb der Strömungsführungseinrichtung einen (vor- )bestimmten bzw. (vor-)bestimmbaren Pegel überschritten hat. Dieser Pegel kann vorzugsweise der Höhe der unteren Kanalwand des Hauptkanals entsprechen. Hierzu können beispielsweise beitragen, den Verlauf des Gaszufuhr-Kanals zumindest abschnittsweise L-förmig zu gestalten und/oder den Gaszufuhr Kanal auf der Unterseite zumindest abschnittsweise abzuflachen und/oder die Gasansaug-Öffnung nur oberhalb des Pegels und/oder nur auf der Oberseite der Strömungsführungseinrichtung zu bilden.

Erfindungsgemäß wird vorgeschlagen, dass der Gaszufuhr-Kanal derart eingerichtet ist, dass die gesamte durch den Gaszufuhr-Kanal strömende Gaszufuhr-Strömung zunächst mit einer Strömungsrichtung von der Unterseite zu der Oberseite der Strömungsführungseinrichtung zumindest einen unteren Bereich einer Kanalwand des Hauptkanals passieren muss, bevor sie zu dem Venturi-Abschnitt strömen kann. Dies bedeutet mit anderen Worten, dass die Gaszufuhr-Strömung den zuvor beschriebenen Pegel passieren muss, bevor sie in Richtung zu dem Venturi-Abschnitt gelenkt wird. In diesem Zusammenhang weist der Gaszufuhr-Kanal beispielhaft zumindest abschnittsweise einen im wesentlichen L-förmigen Verlauf auf (bezogen auf einen Querschnitt der Strömungsführungseinrichtung parallel zur Längsrichtung). Der untere Bereich der Kanalwand des Hauptkanals betrifft in diesem Zusammenhang insbesondere den tiefsten Punkt der Kanal-Innenoberfläche des Hauptkanals.

Dabei ist in dem Gaszufuhr-Kanal mindestens ein Barriere-Element angeordnet ist, welches derart eingerichtet und angeordnet ist, dass es einen Rückströmungsweg (durch den Gaszufuhr-Kanal) von dem Venturi-Abschnitt zu dem Anschluss für die Gasarmatur zumindest teilweise blockieren kann (etwa bedarfsweise mittels einer Ventilfunktion) bzw. blockiert. Dabei wird ein Rückströmungsweg zumindest teilweise blockiert, der entlang der Unterseite des Hauptkanals bzw. im Bereich des tiefsten Punkts der Kanal-Außenoberfläche des Hauptkanals verläuft (bzw. ohne das Barriere-Element verlaufen würde).

Zudem bedeckt das Barriere-Element einen unteren Teilbereich eines Kanalquerschnitts des Gaszufuhr-Kanals. Das Barriere-Element ist im unteren Bereich des Gaszufuhr-Kanals, wie etwa im Bereich zwischen ein im unteren Bereich der Außenoberfläche des Hauptkanals und einem (gegenüberliegenden) unteren Bereich der Innenoberfläche des Gaszufuhr-Kanals angeordnet. Das Barriere-Element kann weiterhin einen (Längs-)Abschnitt, in dem der Gaszufuhr-Kanal den Hauptkanal zumindest abschnittsweise umgibt, insbesondere koaxial umgibt, (in Längsrichtung) zumindest teilweise (insbesondere über einen unteren Teilbereich des Umfangs) begrenzen. Der Kanalquerschnitt bezieht sich dabei in der Regel auf eine Ebene, die orthogonal auf der Längserstreckungsrichtung des Hauptkanals steht.

Nach einer weiteren vorteilhaften Ausgestaltung wird vorgeschlagen, dass das Barriere-Element mit einer Wand gebildet ist, die zwischen dem Venturi-Abschnitt und dem Anschluss für die Gasarmatur in dem Gaszufuhr-Kanal gebildet ist. Die Wand kann dabei in einem oder am Ende eines (Längs-)Abschnitts, in dem der Gaszufuhr-Kanal den Hauptkanal zumindest abschnittsweise umgibt, insbesondere koaxial umgibt, angeordnet sein. Die Wand kann weiterhin einen zwischen dem Gaszufuhr-Kanal bzw. einer (äußeren) Gaszufuhr-Kanalwand und dem Hauptkanal bzw. einer Hauptkanalwand gebildeten Ringraum (in Längsrichtung) zumindest teilweise (insbesondere über einen unteren Teilbereich des Umfangs) begrenzen. Die Wand kann beispielsweise orthogonal zu einer Längserstreckungsrichtung des Hauptkanals ausgerichtet sein. Weiterhin kann die Wand zumindest einen unteren Teilbereich des Außenumfangs des Hauptkanals bzw. einer Hauptkanalwand zumindest teilweise umgreifen.

Nach einer weiteren vorteilhaften Ausgestaltung wird vorgeschlagen, dass das Barriere-Element eine Öffnung im Bereich der Oberseite der Strömungsführungseinrichtung aufweist. Insbesondere kann die Wand eine Öffnung im oberen Bereich eines zwischen dem Gaszufuhr-Kanal bzw. einer (äußeren) Gaszufuhr-Kanalwand und dem Hauptkanal bzw. einer Hauptkanalwand gebildeten Ringraums aufweisen. Es kann vorgesehen sein, dass die Gaszufuhr-Strömung (nur) durch diese Öffnung von dem Anschluss für die Gasarmatur zu dem Venturi-Abschnitt strömen kann. Dies bedeutet mit anderen Worten insbesondere, dass die Gaszufuhr-Strömung diese Öffnung passieren muss, um zu dem Venturi-Abschnitt gelangen zu können. Demgegenüber kann der übrige Teil der Wand einen (ungewollten) Rückfluss von Kondensat zu der Gasarmatur blockieren. Insbesondere kann die Wand den (gesamten) übrigen Teil des Kanalquerschnitts des Gaszufuhr-Kanals (im Bereich um die Öffnung bzw. in der Querschnittsebene, in der auch die Öffnung liegt) bedecken. Grundsätzlich können auch mehrere Öffnungen im Bereich der Oberseite der Strömungsführungseinrichtung vorgesehen sein.

Nach einer weiteren vorteilhaften Ausgestaltung wird vorgeschlagen, dass zumindest der Hauptkanal und der Gaszufuhr-Kanal einteilig bzw. einstückig gebildet sind. Beispielsweise können der Hauptkanal und der Gaszufuhr-Kanal mit demselben Kunststoffmaterial gebildet sein. Zum Beispiel könne der Hauptkanal und der Gaszufuhr-Kanal gemeinsam in einem Bauteil, wie etwa einem Gehäuseelement oder ein Verbindungselement (wie zum Beispiel einem Rohrelement), gebildet sein.

Das erfindungsgemäße Heizgerät umfasst ein System, umfassend eine hier beschriebene Strömungsführungseinrichtung und ein mit dieser strömungstechnisch verbundenes Ansaugrohr. Das Ansaugrohr kann beispielsweise an einem Stirnende der Strömungsführungseinrichtung angeschlossen sein. Über das Ansaugrohr kann beispielsweise Luft aus der Umgebung in ein Heizgerät strömen. Weiterhin kann das System beispielsweise eine Fördereinrichtung, wie etwa ein Gebläse für ein Heizgerät, umfassen. Die Fördereinrichtung kann beispielhaft mit einem dazu gegenüberliegenden Stirnende der Strömungsführungseinrichtung verbunden sein.

Erfindungsgemäß wird vorgeschlagen, dass in dem Ansaugrohr eine Kondensat-Ablassöffnung gebildet ist. Die Kondensat-Ablassöffnung ist insbesondere an einer Unterseite des Ansaugrohrs gebildet. Beispielsweise kann so Kondensat aus der Strömungsführungseinrichtung heraus in das Ansaugrohr fließen und dort über die Kondensat-Ablassöffnung aus dem System abgeführt werden.

Es wird ein Heizgerät für ein Gebäude vorgeschlagen, umfassend ein hier beschriebenes System mit einer hier beschriebenen Strömungsführungseinrichtung. Das Heizgerät kann zur Beheizung des Gebäudes oder eines Teils davon dienen, beispielsweise über die Erwärmung eines Wasserkreislaufs. Das Heizgerät umfasst üblicherweise einen Brenner, in dem ein Brenngas mit Luft verbrannt werden kann, eine Fördereinrichtung zur Förderung eines Brennstoff-Luft-Gemisches hin zu dem Brenner, einem Zuluftkanal bzw. Ansaugkanal über den Luft aus der Umgebung des Heizgerätes und/oder des Gebäudes hin zu einer Mischstelle von Brennstoff und Luft führbar ist. Die Mischstelle ist hier beispielhaft in der Strömungsführungseinrichtung gebildet. Die Strömungsführungseinrichtung ist insbesondere mit der Fördereinrichtung und dem Zuluftkanal bzw. Ansaugkanal verbunden.

Die im Zusammenhang mit der Strömungsführungseinrichtung erörterten Details, Merkmale und vorteilhaften Ausgestaltungen können entsprechend auch bei dem hier vorgestellten System und/oder dem Heizgerät auftreten und umgekehrt. Insoweit wird auf die dortigen Ausführungen zur näheren Charakterisierung der Merkmale vollumfänglich Bezug genommen.

Die Erfindung wird nun anhand der Figuren detailliert erläutert.

Es stellen dar:
Figur 1: eine Strömungsführungseinrichtung gemäß dem Stand der Technik in Schnittdarstellung;
Figur 2: eine Querschnittsansicht zu der Strömungsführungseinrichtung aus Fig. 1;
Figur 3: ein Beispiel für ein hier angegebenes System mit einem Beispiel für eine hier angegebene Strömungsführungseinrichtung in Schnittdarstellung;
Figur 4: eine Querschnittsansicht zu der Strömungsführungseinrichtung aus Fig. 3; und
Figur 5 ein Beispiel für ein Heizgerät für ein Gebäude, in dem eine hier beschriebene Strömungsführungseinrichtung eingesetzt ist.

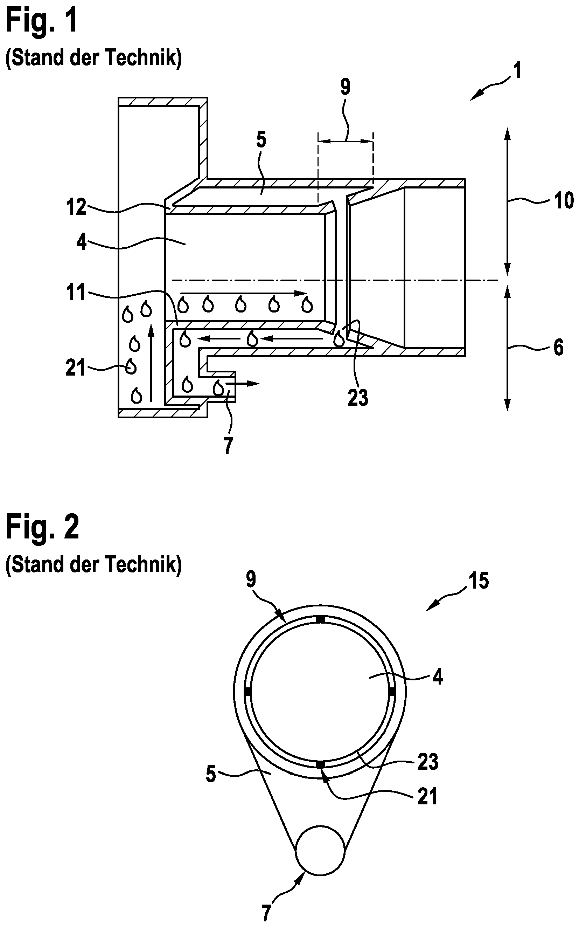

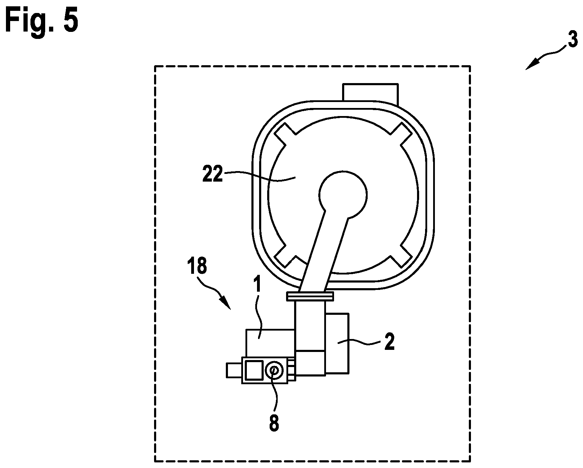

Figur 1 zeigt eine Strömungsführungseinrichtung 1 gemäß dem Stand der Technik in Schnittdarstellung. Die Strömungsführungseinrichtung 1 dient zur Führung mindestens einer Fluid-Strömung im Bereich einer Fördereinrichtung 2 (vgl. Fig. 5) eines Heizgeräts 3 (vgl. Fig. 5) für ein Gebäude. Die Die Strömungsführungseinrichtung 1 umfasst einen Hauptkanal 4 zur Führung einer Fluid-Strömung, die mittels der Fördereinrichtung 2 förderbar ist, sowie einen Gaszufuhr-Kanal 5, der im Bereich der Unterseite 6 der Strömungsführungseinrichtung 1 einen Anschluss 7 für eine Gasarmatur 8 (vgl. Fig. 5) hat. Der Gaszufuhr-Kanal 5 erstreckt sich zumindest teilweise entlang des Hauptkanals 4 und mündet in einem Venturi-Abschnitt 9 des Hauptkanals 4. Die Mündungsstelle ist hier beispielhaft mit einer Gasansaug-Öffnung 23 gebildet. Der Venturi-Abschnitt 9 dient insbesondere dazu, den statischen Druck im Hauptkanal 4 zu senken, um so Gas aus dem Gaszufuhr-Kanal 5 in den Hauptkanal 4 zu saugen. Somit ist in dem Hauptkanal 4 im Bereich des Venturi-Abschnitts 9 auch eine Mischstelle zum Mischen von Brennstoff und Luft gebildet. Die Gasansaug-Öffnung 23 ist beispielhaft in der Form eines um den Hauptkanal 4 umlaufenden Schlitzes gebildet, um in vorteilhafter Weise eine möglichst gleichmäßige Durchmischung zu ermöglichen.

Weiterhin ist in Fig. 1 ein Fluss von Kondensat 21 veranschaulicht, wie er sich beispielsweise einstellen kann, wenn sich aufgrund einer defekten Abgasklappe in einer Mehrfachbelegung Kondensat 21 im Bereich der Fördereinrichtung 2 des Heizgerätes 3 bildet. Sobald das Kondensat 21 einen Pegel überschreitet, welcher dem unteren Bereich 11 der Kanalwand 12 des Hauptkanals 4 entspricht, kann es durch den Hauptkanal 4 bis in den Venturi-Abschnitt 9 fließen. Dort kann es durch die Gasansaug-Öffnung 23 in den unteren Teil des Gaszufuhr-Kanals 5 fließen. Da der Anschluss 7 für die Gasarmatur 8 im Bereich der Unterseite 6 gebildet ist, kann das Kondensat 21, der Schwerkraft folgend, bei der Strömungsführungseinrichtung 1 gemäß dem Stand der Technik weiter bis zu dem Anschluss 7 für die Gasarmatur 8 fließen.

Figur 2 zeigt eine Querschnittsansicht zu der Strömungsführungseinrichtung aus Fig. 1. Am untersten Punkt der Gasansaug-Öffnung 23 kann Kondensat 21 in den Gaszufuhr-Kanal 5 gelangen und durch diesen in Richtung des Anschlusses 7 für die Gasarmatur 8 fließen.

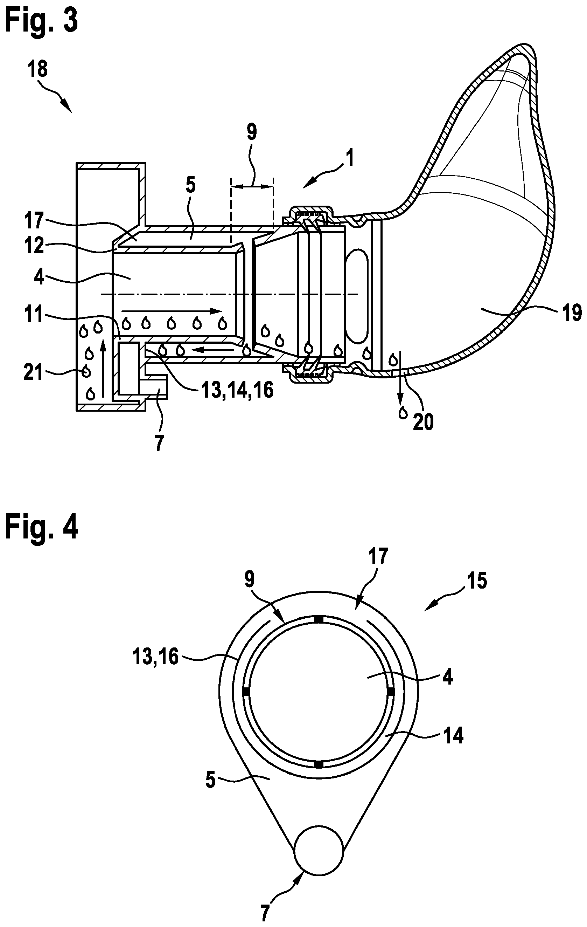

Die Figuren 3 und 4 zeigt ein Beispiel für ein hier angegebenes System 18 mit einem Beispiel für eine hier angegebene Strömungsführungseinrichtung 1 in verschiedenen Schnittdarstellungen. Da die Bezugszeichen einheitlich verwendet werden, wird hier vor allem auf die Unterschiede zum Stand der Technik gemäß Figuren 1 und 2 eingegangen.

Bei der hier angegebenen Strömungsführungseinrichtung 1 ist der Gaszufuhr-Kanal 5 derart eingerichtet, dass ein Fluss von Kondensat 21 von dem Venturi-Abschnitt 9 des Hauptkanals 4 zu dem Anschluss 7 für die Gasarmatur 8 zumindest teilweise (zumindest bei zu erwartenden Kondensat-Pegelständen) verhindert werden kann. Hierzu ist bei dem Ausführungsbeispiel aus Fig. 3 der Gaszufuhr-Kanal 5 derart eingerichtet, dass die gesamte durch den Gaszufuhr-Kanal 5 strömende Gaszufuhr-Strömung zunächst mit einer Strömungsrichtung von der Unterseite 6 zu der Oberseite 10 der Strömungsführungseinrichtung 1 zumindest einen unteren Bereich 11 einer Kanalwand 12 des Hauptkanals 4 passieren muss, bevor sie zu dem Venturi-Abschnitt 9 strömen kann.

Eine entsprechend erzwungene Führung der Gaszufuhr-Strömung ist dadurch realisiert, dass in dem Gaszufuhr-Kanal 5 mindestens ein Barriere-Element 13 angeordnet ist, welches derart eingerichtet und angeordnet ist, dass es einen Rückströmungsweg von dem Venturi-Abschnitt 9 zu dem Anschluss 7 für die Gasarmatur 8 zumindest teilweise blockieren kann. Insbesondere ist das Barriere-Element 13 hierzu in dem Bereich des Gaszufuhr-Kanals 5 angeordnet, in dem ein parallel (bzw. koaxial) zu dem Hauptkanal 4 erstreckender Abschnitt des Gaszufuhr-Kanals in einen (nach unten) hin zu dem Anschluss 7 führender Abschnitt des Gaszufuhr-Kanals 5 mündet.

Aus der Darstellung der Figuren 3 und 4 ist weiterhin zu erkennen, dass das Barriere-Element 13 einen unteren Teilbereich 14 eines Kanalquerschnitts 15 des Gaszufuhr-Kanals 5 bedeckt. Zudem ist beispielhaft veranschaulicht, dass das Barriere-Element 13 mit einer Wand 16 gebildet sein kann, die zwischen dem Venturi-Abschnitt 9 und dem Anschluss 7 für die Gasarmatur 8 in dem Gaszufuhr-Kanal 5 gebildet ist. Darüber hinaus ist beispielhaft gezeigt, dass (zur gezielten Strömungsführung) das Barriere-Element 13 eine Öffnung 17 (nur) im Bereich der Oberseite 10 der Strömungsführungseinrichtung 1 aufweist.

Dies erzwingt, dass das Gas erst nach oben geführt wird, bevor es über einen Einlass (in Form der Öffnung 17) in die Venturi-Geometrie geleitet wird. Dies trägt vorteilhaft auch dazu bei, dass möglicherweise entstehendes Kondensat 21 erst einen sehr hohen Pegel (nämlich bis zur Öffnung 17) erreichen müsste, um in Richtung der Gasarmatur fließen zu können.

Das System 18 umfasst weiterhin ein mit der Strömungsführungseinrichtung 1 strömungstechnisch verbundenes Ansaugrohr 19. In dem Ansaugrohr 19 ist eine Kondensat-Ablassöffnung 20 gebildet. Somit kann das Kondensat 21 durch die Kondensat-Ablassöffnung 20 aus dem System 18 austreten. Dies trägt in vorteilhafter Weise dazu bei, dass der Pegel in dem System 18 nicht so weit steigen kann, dass selbst mit der hier beschriebenen Strömungsführungseinrichtung 1 ein Kondensatfluss zum Anschluss 7 für die Gasarmatur 8 nicht verhindern werden könnte. Somit können (sicherheitsrelevante) Ventile der Gasarmatur besonders vorteilhaft vor Kondensat und damit vor Korrosion geschützt werden.

Zudem ist in Fig. 3 auch zu erkennen, dass zumindest der Hauptkanal 4 und der Gaszufuhr-Kanal 5 einteilig gebildet sein können. Beispielsweise kann die gesamte Strömungsführungseinrichtung 1 als ein Kunststoffteil gebildet sein.

Figur 5 zeigt ein Heizgerät 3 für ein Gebäude, in dem, zur Zufuhr eines Gas-Luft-Gemisches zu einem Brenner 22, eine hier beschriebene Strömungsführungseinrichtung 1 in einem hier beschriebenen System 18 zur Anwendung kommt.

Somit können eine Strömungsführungseinrichtung, ein System sowie ein Heizgerät angegeben werden, die jeweils zumindest dazu beitragen, die Betriebssicherheit eines Heizgerätes zu erhöhen, welches insbesondere auch in einer Mehrfachbelegung betreibbar sein soll.

### Bezugszeichenliste

- 1: Strömungsführungseinrichtung
- 2: Fördereinrichtung
- 3: Heizgerät
- 4: Hauptkanal
- 5: Gaszufuhr-Kanal
- 6: Unterseite
- 7: Anschluss
- 8: Gasarmatur
- 9: Venturi-Abschnitt
- 10: Oberseite
- 11: Bereich
- 12: Kanalwand
- 13: Barriere-Element
- 14: Teilbereich
- 15: Kanalquerschnitt
- 16: Wand
- 17: Öffnung
- 18: System
- 19: Ansaugrohr
- 20: Kondensat-Ablassöffnung
- 21: Kondensat
- 22: Brenner
- 23: Gasansaug-Öffnung

## Patentansprüche

1. Heizgerät (3) für ein Gebäude, umfassend ein System (18) mit einer Strömungsführungseinrichtung (1) zur Führung mindestens einer Fluid-Strömung im Bereich einer Fördereinrichtung (2) des Heizgeräts (3) und einem mit der Strömungsführungseinrichtung (1) strömungstechnisch verbundenen Ansaugrohr (19), wobei die Strömungsführungseinrichtung (1) einen Hauptkanal (4) zur Führung einer Fluid-Strömung, die mittels der Fördereinrichtung (2) förderbar ist, sowie einen Gaszufuhr-Kanal (5), der im Bereich der Unterseite (6) der Strömungsführungseinrichtung (1) einen Anschluss (7) für eine Gasarmatur (8) hat, sich zumindest teilweise entlang des Hauptkanals (4) erstreckt und in einem Venturi-Abschnitt (9) des Hauptkanals (4) in diesen mündet, umfasst, wobei der Gaszufuhr-Kanal (5) derart eingerichtet ist, dass ein Fluss von Kondensat (21) von dem Venturi-Abschnitt (9) des Hauptkanals (4) zu dem Anschluss (7) für die Gasarmatur (8) zumindest teilweise verhindert werden kann, wobei der Gaszufuhr-Kanal (5) derart eingerichtet ist, dass die gesamte durch den Gaszufuhr-Kanal (5) strömende Gaszufuhr-Strömung zunächst mit einer Strömungsrichtung von der Unterseite (6) zu der Oberseite (10) der Strömungsführungseinrichtung (1) zumindest einen unteren Bereich (11) einer Kanalwand (12) des Hauptkanals (4) passieren muss, bevor sie zu dem Venturi-Abschnitt (9) strömen kann, und wobei in dem Ansaugrohr (19) eine Kondensat-Ablassöffnung (20) gebildet ist und in dem Gaszufuhr-Kanal (5) mindestens ein Barriere-Element (13) angeordnet ist, welches derart eingerichtet und angeordnet ist, dass es einen Rückströmungsweg von dem Venturi-Abschnitt (9) zu dem Anschluss (7) für die Gasarmatur (8) zumindest teilweise blockieren kann und das Barriere-Element (13) einen unteren Teilbereich (14) eines Kanalquerschnitts (15) des Gaszufuhr-Kanals (5) bedeckt.

2. Heizgerät (3) nach Anspruch 1, wobei in dem Venturi-Abschnitt (9) eine Gasansaug-Öffnung (23) gebildet ist, die den Hauptkanal (4) und den Gaszufuhr-Kanal (5) miteinander verbindet.

3. Heizgerät (3) nach Anspruch 2, wobei die Gasansaug-Öffnung (23) sich schlitzförmig und/oder zumindest teilweise umlaufend um eine Längsachse des Hauptkanals (4) erstreckt.

4. Heizgerät (3) nach einem der vorhergehenden Ansprüche, wobei der Gaszufuhr-Kanal (5) den Hauptkanal (4) zumindest abschnittsweise umgibt.

5. Heizgerät (3) nach Anspruch 4, wobei der Gaszufuhr-Kanal (5) den Hauptkanal (4) zumindest abschnittsweise koaxial umgibt.

6. Heizgerät (3) nach einem der vorangehenden Ansprüche, wobei das Barriere-Element (13) mit einer Wand (16) gebildet ist, die zwischen dem Venturi-Abschnitt (9) und dem Anschluss (7) für die Gasarmatur (8) in dem Gaszufuhr-Kanal (5) gebildet ist.

7. Heizgerät (3) nach einem der vorangehenden Ansprüche, wobei das Barriere-Element (13) eine Öffnung (17) im Bereich der Oberseite (10) der Strömungsführungseinrichtung (1) aufweist.

8. Heizgerät (3) nach Anspruch 7, wobei die Gaszufuhr-Strömung nur durch diese Öffnung (17) von dem Anschluss (7) für die Gasarmatur (8) zu dem Venturi-Abschnitt (9) strömen kann.

9. Heizgerät (3) nach einem der vorhergehenden Ansprüche, wobei zumindest der Hauptkanal (4) und der Gaszufuhr-Kanal (5) einteilig gebildet sind.

## Claims

1. Heating appliance (3) for a building, comprising a system (18) with a flow guide device (1) for guiding at least one fluid flow in the region of a conveying device (2) of the heating appliance (3) and an intake pipe (19) connected to the flow guide device (1) in a flow-conducting manner, wherein the flow guide device (1) has a main channel (4) for guiding a fluid flow that can be conveyed by means of the conveying device (2), as well as a gas supply channel (5) which has a connection (7) for a gas fitting (8) in the region of the underside (6) of the flow guide device (1), extends at least partially along the main channel (4) and opens into a venturi section (9) of the main channel (4), wherein the gas supply channel (5) (5) is designed such that a flow of condensate (21) from the venturi section (9) of the main channel (4) to the connection (7) for the gas fitting (8) can be at least partially prevented, wherein the gas supply channel (5) is designed such that the entire gas supply flow flowing through the gas supply channel (5) must first pass through at least a lower region (11) of a channel wall (12) of the main channel (4) with a flow direction from the underside (6) to the upper side (10) of the flow guide device (1) before it can flow to the venturi section (9), and wherein a condensate drain opening (20) is formed in the intake pipe (19) and at least one barrier element (13) is arranged in the gas supply channel (5), which is designed and arranged in such a way that it can at least partially block a return flow path from the Venturi section (9) to the connection (7) for the gas fitting (8) and the barrier element (13) covers a lower part (14) of a channel cross-section (15) of the gas supply channel (5).

2. Heating appliance (3) according to claim 1, wherein a gas intake opening (23) is formed in the Venturi section (9), which connects the main channel (4) and the gas supply channel (5) to each other.

3. Heating appliance (3) according to claim 2, wherein the gas intake opening (23) extends in a slot-shaped manner and/or at least partially circumferentially around a longitudinal axis of the main channel (4).

4. Heating appliance (3) according to one of the preceding claims, wherein the gas supply channel (5) surrounds the main channel (4) at least in sections.

5. Heating appliance (3) according to claim 4, wherein the gas supply channel (5) surrounds the main channel (4) coaxially at least in sections.

6. Heating appliance (3) according to one of the preceding claims, wherein the barrier element (13) is formed with a wall (16) which is formed between the Venturi section (9) and the connection (7) for the gas fitting (8) in the gas supply channel (5).

7. Heating appliance (3) according to one of the preceding claims, wherein the barrier element (13) has an opening (17) in the region of the upper side (10) of the flow guide device (1).

8. Heating appliance (3) according to claim 7, wherein the gas supply flow can only flow through this opening (17) from the connection (7) for the gas fitting (8) to the venturi section (9).

9. Heating appliance (3) according to one of the preceding claims, wherein at least the main channel (4) and the gas supply channel (5) are formed in one piece.

## Revendications

1. Appareil de chauffage (3) pour un bâtiment, comprenant un système (18) avec un dispositif de guidage d'écoulement (1) pour le guidage d'au moins un écoulement de fluide dans la zone d'un dispositif de transport (2) de l'appareil de chauffage (3) et un tube d'aspiration (19) relié en écoulement au dispositif de guidage d'écoulement (1), dans lequel le dispositif de guidage d'écoulement (1) comprend un canal principal (4) pour le guidage d'un écoulement de fluide qui peut être transporté au moyen du dispositif de transport (2), ainsi qu'un canal d'amenée de gaz (5) qui présente dans la zone du côté inférieur (6) du dispositif de guidage d'écoulement (1) un raccord (7) pour une armature de gaz (8), s'étend au moins partiellement le long du canal principal (4) et débouche dans une section Venturi (9) du canal principal (4) dans celui-ci, dans lequel le canal d'amenée de gaz (5) est conçu de telle manière qu'un flux de condensat (21) puisse être empêché au moins partiellement de la section Venturi (9) du canal principal (4) au raccord (7) pour l'armature de gaz (8), dans lequel le canal d'amenée de gaz (5) est conçu de telle manière que l'ensemble de l'écoulement d'amenée de gaz s'écoulant par le canal d'amenée de gaz (5) doive passer tout d'abord avec un sens d'écoulement du côté inférieur (6) au côté supérieur (10) du dispositif de guidage d'écoulement (1) par au moins une zone inférieure (11) d'une paroi de canal (12) du canal principal (4) avant qu'il ne puisse s'écouler vers la section Venturi (9), et dans lequel une ouverture de sortie de condensat (20) est formée dans le tube d'aspiration (19) et au moins un élément barrière (13) est agencé dans le canal d'amenée de gaz (5), élément qui est conçu et agencé de telle manière qu'il puisse bloquer au moins partiellement une course de reflux de la section Venturi (9) au raccord (7) pour l'armature de gaz (8) et l'élément barrière (13) recouvre une zone partielle inférieure (14) d'une section transversale de canal (15) du canal d'amenée de gaz (5).

2. Appareil de chauffage (3) selon la revendication 1, dans lequel une ouverture d'aspiration de gaz (23) est formée dans la section Venturi (9), ouverture qui relie l'un à l'autre le canal principal (4) et le canal d'amenée de gaz (5).

3. Appareil de chauffage (3) selon la revendication 2, dans lequel l'ouverture d'aspiration de gaz (23) s'étend en forme de fente et/ou au moins partiellement de manière tournante autour d'un axe longitudinal du canal principal (4).

4. Appareil de chauffage (3) selon l'une quelconque des revendications précédentes, dans lequel le canal d'amenée de gaz (5) entoure au moins par sections le canal principal (4).

5. Appareil de chauffage (3) selon la revendication 4, dans lequel le canal d'amenée de gaz (5) entoure au moins par sections de manière coaxiale le canal principal (4).

6. Appareil de chauffage (3) selon l'une quelconque des revendications précédentes, dans lequel l'élément barrière (13) est formé avec une paroi (16) qui est formée entre la section Venturi (9) et le raccord (7) pour l'armature de gaz (8) dans le canal d'amenée de gaz (5).

7. Appareil de chauffage (3) selon l'une quelconque des revendications précédentes, dans lequel l'élément barrière (13) présente une ouverture (17) dans la zone du côté supérieur (10) du dispositif de guidage d'écoulement (1).

8. Appareil de chauffage (3) selon la revendication 7, dans lequel l'écoulement d'amenée de gaz peut s'écouler seulement par cette ouverture (17) du raccord (7) pour l'armature de gaz (8) à la section Venturi (9).

9. Appareil de chauffage (3) selon l'une quelconque des revendications précédentes, dans lequel au moins le canal principal (4) et le canal d'amenée de gaz (5) sont formés d'un seul tenant.
